# EUROPÄISCHE PATENTSCHRIFT

(11) **EP 2 646 193 B1**
(45) Veröffentlichungstag und Bekanntmachung des Hinweises auf die Patenterteilung: **08.07.2015**
(21) Anmeldenummer: 12701492.6
(22) Anmeldetag: 23.01.2012
(51) Int. Cl.: B23K 20/22

(54) **VERFAHREN UND VORRICHTUNG ZUM PERMANENTEN BONDEN VON WAFERN**
METHOD AND APPARATUS FOR PERMANENTLY CONNECTING WAFERS
PROCEDE ET DISPOSITIF DE CONNECTION PERMANENTE DE PLAQUETTES

(43) Veröffentlichungstag der Anmeldung: 09.10.2013
(73) Patentinhaber: EV Group E. Thallner GmbH, 4782 St. Florian am Inn (AT)
(72) Erfinder: MARTINSCHITZ, Klaus, A-4782 Schärding (AT); WIMPLINGER, Markus, A-4910 Ried im Innkreis (AT); REBHAN, Bernhard, A-4680 Haag a. H. (AT)
(74) Vertreter: Becker, Thomas
(86) Internationale Anmeldenummer: PCT/EP2012/050974
(87) Internationale Veröffentlichungsnummer: WO 2013/110315

(56) Entgegenhaltungen:
- EP-A1- 0 780 187
- EP-A1- 1 643 011
- GB-A- 1 087 304
- US-A- 4 499 156
- US-A- 4 969 593
- US-A- 6 143 587

## Beschreibung

Die vorliegende Erfindung betrifft ein Verfahren zum Bonden einer ersten Bondoberfläche eines ersten, aus einem ersten Material bestehenden Festkörpersubstrats mit einer zweiten Bondoberfläche eines zweiten, aus einem zweiten Material bestehenden Festkörpersubstrats gemäß Patentanspruch 1 sowie einer korrespondierenden Vorrichtung gemäß Patentanspruch 7. US 4 969 593 offenbart den Oberbegriff vom Anspruch 1, bzw. vom Anspruch 7.

Ziel beim permanenten oder irreversiblen Bonden von Festkörpersubstraten ist es, zwischen den beiden Kontaktflächen der Festkörpersubstrate eine möglichst starke und insbesondere unwiderrufliche Verbindung, also eine hohe Bondkraft, zu erzeugen. Hierfür existieren im Stand der Technik verschiedene Ansätze und Herstellungsverfahren, insbesondere das Verschweißen der bzw. das Herstellen eines Diffusionsbonds zwischen den Oberflächen bei höheren Temperaturen.

Permanent verbondet werden alle Arten von Materialien, vorwiegend allerdings Metalle und/oder Keramiken. Eines der wichtigsten Systeme des Permanentbondens sind Metall-Metall Systeme. Vor allem in den letzten Jahren traten die Cu-Cu Systeme vermehrt in Erscheinung. Die Entwicklung von 3D Strukturen verlangt nämlich meistens die Verbindung unterschiedlicher funktionaler Schichten. Diese Verbindung wird immer häufiger über sogenannte TSVs (Through Silicon Vias) realisiert. Die Kontaktierung dieser TSVs zueinander erfolgt sehr oft durch Kupferkontaktstellen. Zum Zeitpunkt des Bondens liegen sehr oft bereits vollwertige, funktionstüchtige Strukturen, beispielsweise Mikrochips, an einer oder mehreren Oberflächen der Festkörpersubstrate vor. Da in den Mikrochips unterschiedliche Materialien mit unterschiedlichen thermischen Ausdehnungskoeffizienten verwendet werden, ist eine Erhöhung der Temperatur beim Bonden unerwünscht. Diese kann zu thermischen Dehnungen und damit zu Thermospannungen führen, die Teile des Mikrochips oder seiner Umgebung zerstören können.

Die bekannten Herstellungsverfahren und bisher verfolgten Ansätze führen häufig zu nicht oder schlecht reproduzierbaren und insbesondere kaum auf veränderte Bedingungen übertragbaren Ergebnissen. Insbesondere benutzen derzeit eingesetzte Herstellungsverfahren häufig hohe Temperaturen, insbesondere >400°C, um wiederholbare Ergebnisse zu gewährleisten.

Technische Probleme wie hoher Energieverbrauch und eine mögliche Zerstörung von auf den Festkörpersubstraten vorhandenen Strukturen resultieren aus den bisher für eine hohe Bondkraft erforderlichen hohen Temperaturen von teilweise weit über 300°C.

Weitere Anforderungen bestehen in:
- der Front-end-of-line-Kompatibilität.
   Darunter versteht man die Kompatibilität des Prozesses während der Herstellung der elektrisch aktiven Bauteile. Der Bondingprozess muss also so ausgelegt werden, dass aktive Bauelemente wie Transistoren, die bereits auf den Strukturwafern vorhanden sind, während der Prozessierung weder beeinträchtigt noch geschädigt werden. Zu den Kompatibilitätskriterien zählen vor allem die Reinheit an gewissen chemischen Elementen (vor allem bei CMOS Strukturen), mechanische Belastbarkeit, vor allem durch Thermospannungen.
- niedrige Kontamination.
- keine, oder möglichst niedrige, Krafteinbringung.
- möglichst niedrige Temperatur, insbesondere bei Materialien mit unterschiedlichem Wärmeausdehnungskoeffizienten.

Vor diesem Hintergrund besteht seit langem ein Bedarf, eine direkte, permanente Verbindung zweier Metalloberflächen bei möglichst niedrigen Temperaturen und Drücken bzw Kräften herzustellen. Unter einer direkten, permanenten Verbindung versteht der Fachmann, mit Vorzug, das Erzeugen eines vollständig neuen Gefüges über die Grenzfläche zweier sich kontaktierender Metalloberflächen hinweg.

Die Gefügeneubildung erfolgt dabei mit Vorzug durch Rekristallisation. Unter Rekristallisation versteht man eine Gefügeneubildung durch Kornwachstum. Voraussetzung für ein solches Kornwachstum sind hohe Verformungsgrade, welche die Versetzungsdichte eines Materials erhöhen, und das Material damit in einen energetisch metastabilen Zustand bringen, was bei Überschreiten einer kritischen Temperatur zur Kornneubildung führt. In der Schwerindustrie werden zum Erreichen hoher Versetzungsgrade vorwiegend Massivumformungsprozesse wie Walzen, Schmieden, Tiefziehen, Tordieren, Scheren etc. verwendet.

Solche Massivumformungsprozesse, mit welchen die oben erwähnte metastabile, versetzungsreiche Mikrostruktur bei geringer Temperatur hergestellt werden kann, sind in der Halbleiterindustrie auf Grund der sehr dünnen Substrate mit extrem feinen Strukturen und der dünnen, zerbrechlichen Wafer nicht einsetzbar. Weder die Strukturen, noch die Wafer können oder dürfen einer Massivumformung ausgesetzt werden, da sie sonst zerstört werden.

Aufgabe der vorliegenden Erfindung ist es daher, ein Verfahren und eine Vorrichtung anzugeben, mit dem das Bonden von zwei Festkörpersubstraten für die Substrate und etwaige Strukturen auf den Substraten schonender und effektiver ausführbar ist. Diese Aufgabe wird mit den Merkmalen der Patentansprüche 1, 7 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Die Grundidee der vorliegenden Erfindung ist es, mindestens eine der beiden Bondoberflächen, vorzugsweise beide Bondoberflächen, vor Kontaktierung derart zu planarisieren, dass die Oberflächenrauigkeit O der Bondoberfläche(n) minimiert wird, um die Grundoberflächen durch Rekristallisation nach Kontaktierung optimal miteinander zu verschweißen beziehungsweise zu bonden. Dabei ist es insbesondere vorgesehen, auf chemisch-mechanische Polierprozesse (CMP) zu verzichten. Des Weiteren wird erfindungsgemäß eine metastabile Mikrostruktur an der Bondoberfläche erzeugt, um eine hohe Versetzungsdichte und/oder eine amorphe Schicht an der Bondoberfläche zu erhalten. Durch die hohe Versetzungsdichte und/oder die amorphe Schicht wird der Rekristallisationsprozess begünstigt und/oder beschleunigt. Insbesondere wird dabei eine glatte Oberfläche vorgesehen (Reduzierung der Oberflächenrauigkeit).

Weiterhin sind für ein verbessertes Bonden der beiden Oberflächen amorphe Bereiche in Oberflächennähe vorgesehen. Die Herstellung amorpher Materialien erfolgt in der Industrie hauptsächlich durch das Aufdampfen eines Materials auf gekühlte Substrate, durch Beschuss von Ionen oder Bestrahlung, durch extrem starke mechanische Verformung etc. Die hier offenbarte Erfindung offenbart eine Möglichkeit, bereits existierende oberflächennahe Bereiche mit hohen Versetzungsdichten und/oder amorphen Bereichen zu erzeugen.

Bevorzugt erfolg die Planarisierung und die Erzeugung der metastabilen Struktur durch ein spanendes Verfahren.

Als erfindungsgemäße Festkörpersubstrate sind Festkörpersubstrate aus folgenden Materialien geeignet:
- Cu-Fe, Cu-Ge, Cu-In, Cu-Li, Cu-Mg, Cu-Mn, Cu-Nb, Cu-Nd, Cu-Ni, Cu-Si, Cu-Sn, Cu-Zn, Cu-Zr, Cu-Ti, Cu-W, Cu-Ti, Cu-Ta, Cu-Au, Cu-Al, Cu-Cu
- W-Fe, W-Ge, W-In, W-Li, W-Mg, W-Mn, W-Nb, W-Nd, W-Ni, W-Si, W-Sn, W-Zn, W-Zr, W-Ti, W-Ti, W-Ta, W-Au, W-Al
- Ti-Fe, Ti-Ge, Ti-In, Ti-Li, Ti-Mg, Ti-Mn, Ti-Nb, Ti-Nd, Ti-Ni, Ti-Si, Ti-Sn, Ti-Zn, Ti-Zr, Ti-Ta, Ti-Au, Ti-Al
- Ta-Fe, Ta-Ge, Ta-In, Ta-Li, Ta-Mg, Ta-Mn, Ta-Nb, Ta-Nd, Ta-Ni, Ta-Si, Ta-Sn, Ta-Zn, Ta-Zr, Ta-Ti, Ta-W, Ta-Ti, Ta-Ta, Ta-Au, Ta-Al
- Au-Fe, Au-Ge, Au-In, Au-Li, Au-Mg, Au-Mn, Au-Nb, Au-Nd, Au-Ni, Au-Si, Au-Sn, Au-Zn, Au-Zr, Au-Ti, Au-W, Au-Ti, Au-Au, Au-Au, Au-Al
- Al-Fe, Al-Ge, Al-In, Al-Li, Al-Mg, Al-Mn, Al-Nb, Al-Nd, Al-Ni, Al-Si, Al-Sn, Al-Zn, Al-Zr, Al-Ti, A1-W, Al-Ti, Al-Al, Al-Al, Al-Al

Als Festkörpersubstrate sind außerdem folgende Mischformen von Halbleitern denkbar:
- III-V: GaP, GaAs, InP, InSb, InAs, GaSb, GaN, AlN, InN, AlₓGa₁₋ₓAs, InₓGa₁₋ₓN
- IV-IV: SiC, SiGe,
- III-VI: InAlP.
- nichtlineare Optik: LiNbO₃, LiTaO₃, KDP (KH₂PO₄)
- Solarzellen: CdS, CdSe, CdTe, CuInSe₂, CuInGaSe₂, CuInS₂, CuInGaS₂
- Leitende Oxide: In₂₋ₓSnxO_{3-y}

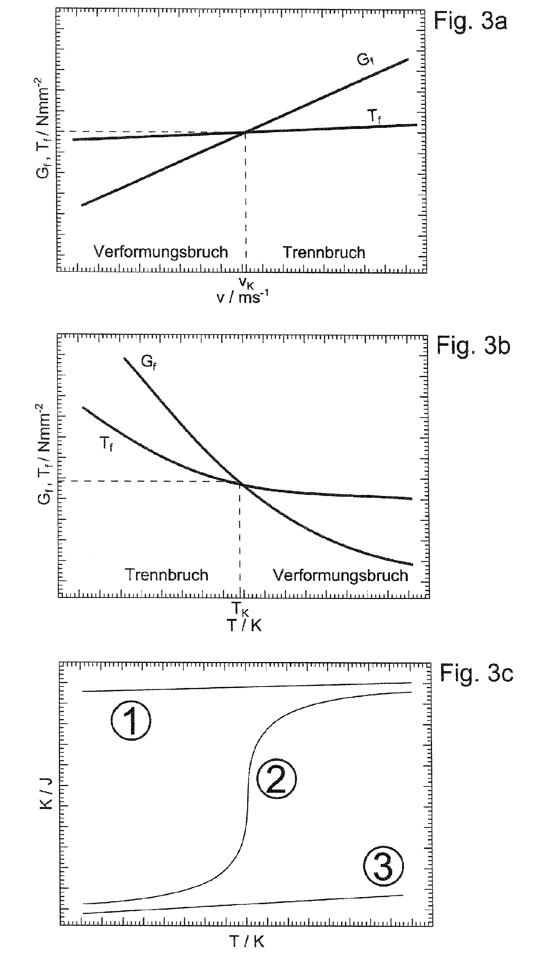

Um die Anwendung der erfindungsgemäßen Idee auf Strukturen im Mikro- und/oder Nanokosmos zu erläutern, sollen zuerst allgemeine physikalische, chemische und werkstoffwissenschaftliche Erkenntnisse erläutert werden. Wenn im weiteren Verlauf von Werkzeug gesprochen wird, so ist damit im Allgemeinen jedes Werkzeug gemeint, welches in der Lage ist, bei einer gewissen Temperatur T mit einer Geschwindigkeit v auf ein Werkstück aufzutreffen. Es handelt sich daher um eine schlagende Beanspruchung des Werkstücks. Bei dem Werkzeug handelt es sich vorzugsweise um ein genormtes Werkzeug, beispielsweise eine Kerbschlagprüfmaschine nach Charpy (DIN EN 10045-1). Bei dem Werkstück handelt es sich bevorzugt um eine Normprobe. Die Figur 3a und Figur 3b zeigen schematisch den Einfluss der Werkzeuggeschwindigkeit (Figur 3a) und der Temperatur (Figur 3b) auf die Trennbruchfestigkeit (T_{f}) und die Gleitbruchfestigkeit (G_{f}) bei Bulkmetallen. Bei den Diagrammen handelt es sich um schematische Darstellungen dieser beiden physikalischen Eigenschaften. Da die Zahlenwerte für unterschiedliche Materialien verschieden sind, werden keine absoluten Zahlenwerte angegeben. In Figur 3a ist die Abhängigkeit der Gleitbruch- und Trennfestigkeit des Materials als Funktion der Werkzeuggeschwindigkeit dargestellt.

Die Trennbruchfestigkeit T_{f} ist der Widerstand, den der Werkstoff einer Kraft entgegensetzt, welche den Werkstoff ohne plastische Verformung, also ideal spröde, trennen möchte. Die Gleitfestigkeit G_{f} ist der Widerstand, den der Werkstoff einer Kraft, genauer einer Schubkraft, entgegensetzt, welche den Werkstoff plastisch verformen möchte. Die Mechanismen der plastischen Verformung sind dabei vor allem die mechanischen Plastifizierungsmechanismen der Versetzungsbewegung- und Versetzungserzeugung und die Bildung von kristallographischen Zwillingen. Die Unterscheidung in Trenn- und Gleitbruchfestigkeit kann nicht vollständig vom Werkstoff abhängig gemacht werden. So können durchaus auch duktile Materialien Sprödbruchverhalten zeigen, wenn sie eingelagerte intermetallische Phasen besitzen oder ungünstige Spannungsverhältnisse aufgrund der Probengeometrie vorherrschen. Des Weiteren spielen die Aufschlagsbedingungen von Werkzeugen und die Probentemperatur entscheidende Rollen. Die Figuren 3a und 3b zeigen schematische Verläufe der Gleit- und Trennbruchfestigkeit als Funktion der Temperatur und der Werkzeuggeschwindigkeit für Metalle. In Figur 3a ist erkennbar, dass bei niedrigen Werkzeuggeschwindigkeiten unterhalb einer - jeweils für den Werkstoff (insbesondere unter Berücksichtigung der Dicke) empirisch ermittelten - kritischen Geschwindigkeit vₖ die Gleitbruchfestigkeit G_{f} niedrigere Werte als die Trennbruchfestigkeit T_{f} besitzt. Demnach wird das Material bei Werkzeuggeschwindigkeiten unterhalb der kritischen Geschwindigkeit vₖ eher durch Verformungsbruch (also Gleitbruch) brechen als durch Trennbruch. Oberhalb der kritischen Geschwindigkeit vₖ liegen die Werte der Trennbruchfestigkeit T_{f} unterhalb der Gleitbruchfestigkeit G_{f}. Werkzeuge, die mit Geschwindigkeiten über der kritischen Geschwindigkeit vₖ auf den Werkstoff auftreffen, werden diesen spröd, also durch Trennbruch, brechen lassen. Anhand der Figur 3a kann man erkennen, dass die Gleitbruchfestigkeit G_{f} sehr stark von der Werkzeuggeschwindigkeit vₖ abhängt, während sich die Trennbruchfestigkeit T_{f} kaum mit der Werkzeuggeschwindigkeit ändert. Die Trennbruch- und Gleitbruchfestigkeiten hängen zusätzlich von der Werkstofftemperatur ab (Figur 3b). Bei Temperaturen oberhalb der kritischen Temperatur Tₖ erfolgt das Werkstoffversagen vorwiegend durch Gleitbruch, wohin gegen unterhalb der kritischen Temperatur Tₖ der Werkstoff vorwiegend auf Grund von Sprödbruch (also Trennbruch) versagt. Erfindungsgemäß erfolgt somit ein "Einfrieren" der Versetzungen bei niedrigen Temperaturen. Die Versetzungsbewegung ist als materialphysikalischer Prozess explizit abhängig von der Temperatur. Je niedriger die Temperatur, desto geringer die Versetzungsmobilität und desto schwerer wird es, die Versetzungen der Festkörpersubstrate zu bewegen. Aus den Figuren 3a und 3b kann man erkennen, dass ein Metall im Allgemeinen umso spröder bricht, je höher die Werkzeuggeschwindigkeit und je geringer die Temperatur ist. Um unterschiedliche Materialien nach ihrem Bruchverhalten einzuteilen, wird die aus dem Experiment ermittelte Kerbschlagarbeit K, die benötigt wird um das Material zu brechen, als Funktion der Temperatur aufgetragen (Figur 3c). Man erhält damit ein Kerbschlagarbeit-Temperaturdiagramm, welches, abhängig vom jeweiligen Werkstoff, einen expliziten Abfall der Kerbschlagarbeit aufweist (2), oder dessen Kerbschlagarbeit sich über das Temperaturintervall nur leicht ändert (1 oder 3). Materialien mit dem Kurvenverlauf (1) benötigen eine sehr hohe Kerbschlagarbeit über den gesamten Temperaturbereich und werden hauptsächlich durch Verformungsbrüche gebrochen. Die höhere Kerbschlagarbeit kommt dadurch zustande, dass sehr viel Energie in die Erzeugung und Bewegung von Versetzungen gesteckt wird. Materialien mit dem Kurvenverlauf (3) benötigen eine sehr geringe Kerbschlagarbeit über den gesamten Temperaturbereich und werden hauptsächlich durch Trennbrüche gebrochen. Die niedrige Kerbschlagenergie kommt dadurch zustande, dass ein allfällig vorhandener oder gebildeter Riss nur jene Energie aufbringen muss, die nötig ist, um weiterzuwachsen, daher die Bindungsenergie zwischen den Atomen. Im Gegensatz zu den Verformungsbrüchen wird keine Energie für eine Versetzungsbildung und/oder Versetzungsbewegung verbraucht. Daher ist die Kerbschlagenergie geringer. Des Weiteren gibt es Materialien, deren Kerbschlagenergie einen Kurvenverlauf (3) aufweist. Dieser Kurvenverlauf zeigt einen eindeutigen Übergang vom Verformungsbruch zum Trennbruch mit sinkender Temperatur. Bei Materialien mit dieser physikalischen Eigenschaft kann demnach das Bruchverhalten explizit durch Temperaturvariation beeinflusst werden.

Es sei hierbei erwähnt, dass sich die Kerbschlagarbeit von Materialien wie Al, Cu, Ni oder austenitische Stähle (im Allgemeinen vorwiegend Materialien mit kubisch flächenzentriertem Kristallgitter) durch die Kurve (1) beschrieben wird. Das Bruchverhalten von kubisch raumzentrierten Materialien wird vorwiegend durch Kurve (2) beschrieben. Hochfeste Materialien, Glas und Keramik zeigen hauptsächlich das Verhalten nach Kurve (3). Dem Fachmann auf dem Gebiet sind all diese Eigenschaften aus der Physik der Werkstoffe, genauer aus der Gruppe der Bulkmaterialien, bestens bekannt. Alle hier offenbarten und dem Fachmann auf dem Gebiet bekannten Eigenschaften von Bulkmaterialien sollen nun ausgenutzt werden, um einerseits die Oberfläche von bereits sich auf einem Wafer befindenden Strukturen zu planarisieren und andererseits den oberflächennahen Bereich in einen metastabilen Zustand zu bringen, der das Bonden zu anderen Oberflächen anderer Strukturen begünstigt und/oder beschleunigt.

Damit eine Rekristallisation stattfindet, sind erfindungsgemäß zwei Bedingungen kumulativ zu erfüllen.

Erstens muss ein hoch verformtes Metall über eine Rekristallisationstemperatur erwärmt werden. Zinn beispielsweise rekristallisiert bei ca. 0 °C, Zink bei ca. 20 °C, Aluminium bei ca. 100 °C, Kupfer bei ca. 270 °C, Eisen bei ca. 450 °C und Wolfram bei ca. 1200 °C. Im Allgemeinen muss man davon ausgehen, dass die wirklichen Rekristallisationstemperaturen über oder unter diesen Werten liegen. Ein entscheidender Einflussfaktor für die Rekristallisationstemperatur ist die Verunreinigung von Legierungszusätzen. So liegt beispielsweise die Rekristallisationstemperatur von 99,999% Kupfer bei 120 °C, die Rekristallisationstemperatur von elektrolytisch abgeschiedenem Kupfer, welches naturgemäß eher unrein ist, allerdings bei ca. 200 °C. Die Abscheidung von Kupfer durch Elektrolyse ist immer mit organischen Additiven, Ionen und Verunreinigungen verbunden. Abgeschiedenes Kupfer aus CVD und/oder PVD Prozessen ist hingegen hochrein.

Die zweite Bedingung für eine Rekristallisation ist ein energetisch metastabiler Zustand. Dieser wird erfindungsgemäß durch eine hohe Versetzungsdichte und/oder durch ein amorph-kristallines Gefüge und/oder durch quasikristalline Gefüge hergestellt. Vorzugsweise ist eine amorphe Matrix vorgesehen, in der partiell kristalline Phasen und/oder quasikristalline Phasen vorkommen, mit größtem Vorzug Mikro- und/oder Nanokristalle mit hoher Versetzungsdichte. Denkbar ist auch jede beliebige Kombination aus Kristallen, Quasikristallen und amorphen Gefügebestandteilen in jedem beliebigen Volumenverhältnis. Um den weiteren Verlauf des Textes klarer zu gestalten wird vorwiegend von kristallin-amorphen Gefügen gesprochen werden.

Es ist bekannt, dass so genannte "size-effects" das physikalisch-chemische Verhalten von Werkstoffen radikal verändern können. Die Rekristallisation von Kupfer, insbesondere für sehr kleine Abmessungen, kann bereits unterhalb der oben genannten minimalen Rekristallisationstemperatur von 120 °C stattfinden. Somit können hochreine Materialien mit Mikro- und/oder Nanostrukturen, deren Oberflächen durch schnelle Werkzeuge bei den vorgesehenen Temperaturen bearbeitet werden, erfindungsgemäß eine effizientere Rekristallisation bei niedrigeren Temperaturen bewirken als entsprechende Bulkmaterialien.

Besonders vorteilhaft ist es erfindungsgemäß, wenn nach ersten Bearbeitung (und gegebenenfalls der zweiten Bearbeitung) möglichst zeitnah, insbesondere innerhalb von 2 Stunden, vorzugsweise innerhalb von 30 Minuten, noch bevorzugter innerhalb von 10 Minuten, idealerweise innerhalb von 5 Minuten, die Kontaktierung der Festkörpersubstrate erfolgt. Durch diese Maßnahme werden etwaige unerwünschte Reaktionen wie Oxidierung der Funktionsschicht oder der Oberflächen der Festkörpersubstrate minimiert. Die erfindungsgemäßen Bondoberflächen werden auf eine Oberflächenrauigkeit O mit einer quadratischen Rauheit (Rq) von weniger als 1 µm, mit Vorzug weniger als 100 nm, mit größterem Vorzug weniger als 10 nm, mit allergrößtem Vorzug weniger als 1 nm bearbeitet. Diese empirischen Werte werden mit der Atomic Force Microscopy (AFM) ermittelt.

Ein weiterer Aspekt der Erfindung besteht in der Ausbildung eines nahtlosen Übergangs zwischen den beiden zu bondenden Festkörpersubstraten. Unter einem nahtlosen Übergang wird ein polykristallines Gefüge verstanden, das sich ohne Unterbrechung der Kornstruktur von einer Seite des gebondeten Wafers auf die andere Seite erstreckt. Die Erzeugung eines solchen nahtlosen Übergangs wird insbesondere durch Rekristallisation bei den beschriebenen, insbesondere empirisch bezogen auf das Material der Festkörpersubstrate und deren Abmessungen ermittelten Parametern durchgeführt. Eine Rekristallisation ist ein durch eine hohe Versetzungsdichte und eine erfindungsgemäß empirisch ermittelte Temperatur hervorgerufene Gefügeneubildung durch Kornwachstum. Das Gefüge befindet sich durch die erfindungsgemäß vorgesehene hohe Versetzungsdichte in einem metastabilen Zustand. Dieser metastabile Zustand wird durch die sich überlagernden Dehnungsfelder der Versetzungen erzeugt. Unterhalb der Rekristallisationstemperatur reicht die thermische Bewegung nicht dazu aus, dass die Versetzungen des Versetzungsnetzwerks durch die sich abstoßenden Dehnungsfelder von selbst zu gleiten beginnen. Die Versetzungen sind quasi "eingefroren". Überschreitet die Temperatur die Rekristallisationstemperatur, reicht die thermische Bewegung aus, die Versetzungsdichte durch Versetzungsbewegung abzubauen. Mit dem Abbau der Versetzungsdichte geht eine vollständige Neubildung des Gefüges einher. Der erfindungsgemäß erzielte Effekt besteht darin, dass die Gefügeumbildung über das Bond-Interface (definiert beziehungsweise begrenzt durch die Oberflächenrauigkeit O) hinaus erfolgt und so das Interface praktisch vollkommen verschwinden zu lassen.

Ein erfindungsgemäßes Verfahren weist demnach, insbesondere in seiner allgemeinsten Form, zum Bonden einer ersten Bondoberfläche eines ersten, aus einem ersten Material bestehenden Festkörpersubstrats mit einer zweiten Bondoberfläche eines zweiten, aus einem zweiten Material bestehenden Festkörpersubstrats folgende Schritte, insbesondere folgenden Ablauf auf:
- Bearbeitung der ersten und/oder zweiten Bondoberflächen mit einem Spanwerkzeug zur Erzeugung eines metastabilen Gefüges im zumindest oberflächennahen Bereich und, insbesondere bei einer Geschwindigkeit vₛ unterhalb einer kritischen Geschwindigkeit vₖ und bei einer Temperatur Tₛ oberhalb einer kritischen Temperatur Tₖ, und, vorzugsweise einer gleichzeitigen und/oder anschließenden Planarisierung auf eine quadratische Rauheit (Rq) von weniger als 1 µm, mit Vorzug weniger als 100 nm, mit größtem Vorzug weniger als 10 nm, mit allergrößtem Vorzug weniger als 1 nm,
- Kontaktieren des ersten Festkörpersubstrats mit dem zweiten Festkörpersubstrat an den Bondoberflächen und
- Temperaturbeaufschlagung der kontaktierten Festkörpersubstrate zur Ausbildung eines zumindest überwiegend durch Rekristallisation bewirkten permanenten Bonds an den Bondoberflächen jeweils bis in eine Rekristallisationstiefe R größer als die Oberflächenrauigkeit O der Bondoberflächen mit einer Bondtemperatur T_{B} oberhalb der Rekristallisationstemperatur.

Eine korrespondierende, erfindungsgemäße Vorrichtung weist, insbesondere in ihrer allgemeinsten Ausführung, folgende Merkmale auf:
- einem Spanwerkzeug zur Bearbeitung der ersten und/oder zweiten Bondoberflächen zur Erzeugung eines metastabilen Gefüges im zumindest oberflächennahen Bereich, insbesondere bei einer Geschwindigkeit vₛ unterhalb einer kritischen Geschwindigkeit vₖ und bei einer Temperatur Tₛ oberhalb einer kritischen Temperatur Tₖ, und bis zu einer Oberflächenrauigkeit O von weniger als 1 µm, mit Vorzug weniger als 100 nm, mit größtem Vorzug weniger als 10 nm, mit allergrößtem Vorzug weniger als 1 nm,
- Mitteln zum Kontaktieren des ersten Festkörpersubstrats mit dem zweiten Festkörpersubstrat an den Bondoberflächen und
- Mittel zur Temperaturbeaufschlagung der kontaktierten Festkörpersubstrate zur Ausbildung eines zumindest überwiegend durch Rekristallisation bewirkten permanenten Bonds an den Bondoberflächen jeweils bis in eine Rekristallisationstiefe R größer als die Oberflächenrauigkeit O der Bondoberflächen mit einer Bondtemperatur T_{B} oberhalb der Rekristallisationstemperatur.

Ein Spanwerkzeug ist zur Bearbeitung der ersten und/oder zweiten Bondoberfläche bei einer Geschwindigkeit vₛ unterhalb einer kritischen Geschwindigkeit vₖ und bei einer Temperatur Tₛ oberhalb einer kritischen Temperatur Tₖ und bis zu einer Oberflächenrauigkeit von weniger als 1 µm, mit Vorzug weniger als 100 nm, mit größtem Vorzug weniger als 10 nm, mit allergrößtem Vorzug weniger als 1 nm ausgebildet. In einer vorteilhaften Ausführungsform der vorliegenden Erfindung ist vorgesehen, dass das erste und das zweite Material identisch ausgewählt werden. Hierdurch wird die Rekristallisation begünstigt. In einer weiteren erfindungsgemäßen Ausführungsform ist vorgesehen, dass das erste und/oder das zweite Material metallisch sind. Die vorliegende Erfindung eignet sich insbesondere für metallische Materialien, so dass mit solchen ein optimales Ergebnis erzielt werden kann.

Soweit die Ausbildung des permanenten Bonds bei einer Bondtemperatur T_{B} größer als der kritischen Temperatur Tₖ erfolgt, wird die Ausbildung des permanenten Bonds beschleunigt.

Gemäß einer weiteren, vorteilhaften Ausführungsform ist vorgesehen, dass die Bearbeitung mit dem Spanwerkzeug derart erfolgt, dass an der ersten und/oder zweiten Bondoberfläche eine amorphe Schicht und/oder eine Schicht erhöhter Versetzungsdichte gebildet wird. Die Parameter der Bearbeitungsgeschwindigkeit und Temperatur sind dabei insbesondere abhängig von dem Material der Festkörpersubstrate und deren Abmessungen, insbesondere deren Dicke. Geeignete Parameter können, insbesondere materialspezifisch, empirisch ermittelt werden.

Mit Vorteil ist in einer weiteren Ausführungsform vorgesehen, dass nach der ersten Bearbeitung und vor dem Kontaktieren eine zweite Bearbeitung der ersten und/oder zweiten Bondoberflächen mit einem, insbesondere dem gleichen, Spanwerkzeug bei einer Geschwindigkeit vₒ oberhalb der kritischen Geschwindigkeit vₖ, insbesondere bei einer Temperatur Tₒ unterhalb der kritischen Temperatur Tₖ, zur Reduzierung der Oberflächenrauigkeit O kleiner als 100 nm, vorzugsweise kleiner als 10 nm, noch bevorzugter kleiner als 1 nm, mit größtem Vorzug kleiner als 0,1 nm, erfolgt. Hierdurch wird nach der Erzeugung der Mikrostruktur (erste Bearbeitung) die Oberflächenrauigkeit O reduziert, insbesondere durch Trennbruch. Sollte die Oberflächenrauhigkeit bereits durch die erste Bearbeitung weit genug reduziert worden sein, ist dieser Prozessschritt nicht notwendig.

Grundsätzlich unterscheidet man zwei Arten des Trennbruchs, den interkristallinen und den transkristallinen Trennbruch (Der Trennbruch wird in der Literatur auch sehr oft als Sprödbruch bezeichnet). Beim interkristallinen Trennbruch verläuft der Riss entlang der Korngrenzen eines Korns. Beim transkristallinen Trennbruch verläuft der Riss quer durch das Korn. Sollte sich durch die empirische Daten ergeben, dass das Material durch interkristallinen Bruch bricht und sich dadurch eine ungünstige, daher hohe, Oberflächenrauhigkeit ergibt, so hat man entsprechend die erfindungsgemäßen Parameter so abzuändern, dass die Oberflächenrauhigkeit minimal wird. Dieser Zustand kann dann, entgegen der hier explizit offenbarten Erfindung, sehr wohl auch nur durch Gleitbruchverformung ergeben. Es sei allerdings erwähnt, dass die Mikrostruktur der verwendeten Materialien mit Vorzug Körner im Nanometerbereich aufweist und es daher selbst bei einem interkristallinen Trennbruch nur eine Rauhigkeit im Nanometerbereich geben kann. Im Besonderen ist der (mittlere) Korndurchmesser dann die obere Schranke für diese (mittlere) Rauhigkeit. Sollte das Gefüge Körner im Mikrometerbereich besitzen, so ist auf alle Fälle ein transkristalliner Trennbruch erwünscht. Genannt seien hierbei beispielhaft aber nicht ausschließend Korngrenzenausscheidungen, intermetallische Phasen im Korninneren, gerichtete Mikrostrukturelemente welche Risse umleiten können etc. Im Allgemeinen kann erwähnt werden, dass ein Korn bevorzugt entlang der Korngrenze brechen wird, wenn die Festigkeit zwischen den Körnern geringer ist als die Festigkeit der Atome innerhalb eines Korns ist.

Die Erfindung betrifft somit ein Verfahren, mit dem die Rekristallisation eines Werkstoffs (Material der Festkörpersubstrate) bei vergleichsweise niedriger Temperatur in oberflächennahen Bereichen der Bondoberfläche durch die Erzeugung eines metastabilen Energiezustandes in der Gefügestruktur durchgeführt wird. Somit werden zwei miteinander in Kontakt gebrachte Bondoberflächen mit einer vergleichsweise sehr geringen Oberflächenrauigkeit O permanent und nahtlos miteinander verbunden. Vorzugsweise wird nur in oberflächennahen Bereichen der Bondoberflächen ein metastabiler Energiezustand erzeugt. Dabei wird ein Spanwerkzeug, insbesondere bestehend aus mehreren Werkzeugen, verwendet, die oder das in der Lage ist/sind, durch Frequenz, Schneidegeschwindigkeit, Werkzeuggeometrie, Werkzeugtemperatur und/oder Schneideneinsatzwinkel eine bestimmte Mikrostruktur an der Bondoberfläche einzustellen. Dabei ist es erfindungsgemäß besonders vorteilhaft, wenn die Werkzeugparameter und Umgebungsparameter so gewählt werden, dass der oberflächennahe Bereich beziehungsweise die Bondoberflächen nach dem Durchlauf des Werkzeugs eine erhöhte Versetzungsdichte aufweisen.

Nach der Rekristallisation ist das Gefüge mit Vorzug möglichst grobkörnig. Ein grobkörniges Gefüge besitzt einen sehr geringen thermischen und vor allem elektrischen Widerstand. Damit eignen sich derartige grobkörnige, mit Vorzug über das Interface sogar einkristalline, Gefüge besonders für elektrisch leitende Verbindungen. Da die Industrie die erfindungsgemäße Methode bevorzugt, aber nicht ausschließlich für die Herstellung von Interconnects, als elektrisch leitenden Verbindungen verwenden wird, ist daher eine möglichst niedriger elektrischer Widerstand und damit ein möglich grobkörniges Gefüge meist erwünscht. Für Bauteile, welche mit den erfindungsgemäßen Verfahren miteinander verbunden werden und nur einen mechanisch stabilisierenden, besonders thermo-mechanisch stabilisierenden Effekt haben sollen, ist dagegen ein feinkörniges Gefüge von Vorzug, da dieses besonders bei thermischer Wechselbelastung eine höhere Dauerfestigkeit besitzt.

In einer vorteilhaften Ausführungsform der Erfindung werden die Werkzeugparameter und Umgebungsparameter so gewählt, dass die Bondoberfläche beziehungsweise der oberflächennahe Bereich nach der ersten Bearbeitung, also dem Durchlauf des Werkzeugs, aus einer amorphen Schicht besteht, in welcher kristalline Bereiche vorgesehen sind, die vorzugsweise eine sehr hohe Versetzungsdichte aufweisen. Die Dicke der amorphen Schicht wird insbesondere durch die - empirisch ermittelte - Werkzeuggeschwindigkeit bestimmt.

Ein weiterer, elementarer Aspekt der Erfindung ist die Rekristallisation über die Kontaktebene beziehungsweise über die oberflächennahe Schicht des Kontakts (insbesondere im Bereich der Oberflächenrauigkeit O) hinweg. Dies wird erfindungsgemäß insbesondere dadurch erreicht beziehungsweise optimiert, indem die Oberflächenrauigkeit O vergleichsweise gering eingestellt wird, nämlich durch die Bearbeitung mit dem Spanwerkzeug. Durch eine gezielte Einstellung der Geschwindigkeit des Werkzeuges und der Temperatur, kann die Oberflächenrauhigkeit O minimiert werden. Bei den meisten Materialien wird die minimale Oberflächenrauhigkeit O mit einer hohen Werkzeuggeschwindigkeit und einer tiefen Temperatur einhergehen, da Trennbruchoberflächen glatter sind als Oberflächen, die einen plastischen Verformungsprozess durchlaufen haben. Die geringere Oberflächenrauhigkeit ändert zwar physikalisch gesehen nichts an der Rekristallisation, also dem Gefügeumbau, erlaubt allerdings den neu gebildeten Körnern, die Kontaktebene leichter zu überbrücken, da es mehr Kontaktstellen durch die geringere Oberflächenrauhigkeit gibt.

Die Rekristallisationstemperaturen sind abhängig von dem verwendeten Material der Festkörpersubstrate und diese ist insbesondere abhängig von der Versetzungsdichte des Materials. Für die Zwecke der vorliegenden Beschreibung wird 50% der Schmelztemperatur des Materials als Rekristallisationstemperatur angenommen (homologe Temperatur von 0.5). Erfindungsgemäß ist es denkbar, die Rekristallisationstemperatur durch gezielte Zugabe von Zusätzen, insbesondere Legierungselementen oder gezielter Verunreinigung zu beeinflussen, mit Vorzug durch Verwendung hochreiner Metalle auf ein Minimum zu senken.

Die empirische Ermittlung von materialspezifischen Parametern kann, insbesondere durch Kerbschlagzähigkeitsmessung an Bulkmaterialien erfolgen. Weiterhin kann die empirische Ermittlung von erfindungsgemäßen Parametern anhand der tatsächlichen Ausführung und Versuchsreihen mit der erfindungsgemäßen Vorrichtung ermittelt werden. Dies ist insbesondere deshalb bevorzugt, weil eine Übertragung der Standardwerte von Bulkmaterialien der erfindungsgemäßen Parameter auf die dünnen Substrate zumindest nicht ohne weiteres möglich ist.

Weiterhin ist es erfindungsgemäß von Vorteil, in einer Ausführungsform der Erfindung den Schritt der Bearbeitung der ersten und/oder zweiten Bondoberflächen in einem ersten Modul durchzuführen, während das Kontaktieren, das Ausrichten (Alignment) und die Temperaturbeaufschlagung der kontaktierten Festkörpersubstrate in einem separaten zweiten Modul (räumlich getrennt vom ersten Modul) erfolgt.

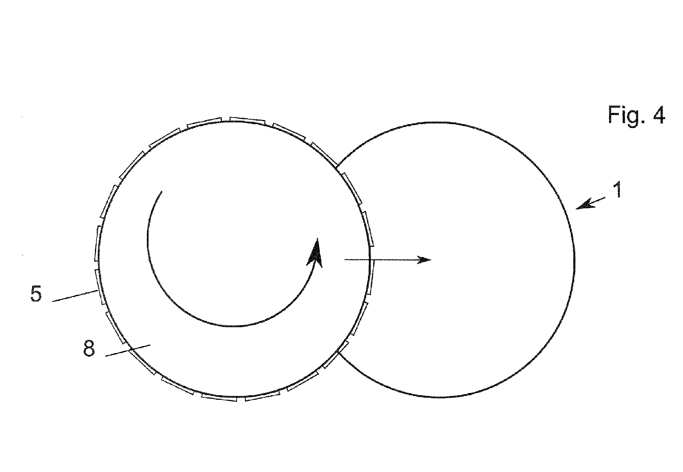

Beispielhaft aber nicht einschränkend wird in Figur 4 eine Oberansicht eines möglichen Werkzeughalters mit Spanwerkzeugen skizzenhaft und stark vereinfacht dargestellt, welcher sich um seine Achse dreht und durch einen Vorschub über den zu bearbeitenden Wafer geschoben wird. Dam Fachmann auf dem Gebiet sind diese Werkzeugarten oder ähnlich arbeitende Werkzeuge bestens bekannt.

Erfindungsgemäß ist auch ein Probenhalter vorgesehen der entsprechend aktiv geheizt und/oder gekühlt werden kann, um den zu bearbeitenden Wafer auf die gewünschte Temperatur zu bringen. Des Weiteren wird offenbart, dass die beiden Wafer nach dem erfindungsgemäßen Behandlungsvorgang zueinander ausgerichtet werden können/müssen.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1a: einen erfindungsgemäßen Verfahrensschritt der Bearbeitung eines Festkörpersubstrats mit einem erfindungsgemäßen Spanwerkzeug,
- Figur 1b: eine erfindungsgemäß bearbeitete Bondoberfläche mit einer oberflächennahen Schicht mit erhöhter Versetzungsdichte,
- Figur 1c: eine erfindungsgemäß bearbeitete Bondoberfläche mit einer oberflächennahen, amorphen Schicht,
- Figur 1d eine: erfindungsgemäß bearbeitete Bondoberfläche mit einer oberflächennahen, amorphen Schicht mit erhöhter Versetzungsdichte,
- Figur 1e: eine erfindungsgemäß bearbeitete Bondoberfläche mit einer oberflächennahen, amorphen Schicht mit kristallinen Bereichen mit hoher Versetzungsdichte,
- Figur 2a: ein Verfahrensschritt der erfindungsgemäßen Bearbeitung einer ersten und einer zweiten Bondoberfläche analog Figur 1b,
- Figur 2b: ein erfindungsgemäßer Verfahrensschritt des Kontaktierens der Festkörpersubstrate,
- Figur 2c: ein erfindungsgemäßer Verfahrensschritt der Temperaturbeaufschlagung der kontaktierten Festkörpersubstrate zur Ausbildung eines zumindest überwiegend durch die Kristallisation bewirkten permanenten Bonds an den Bondoberflächen,
- Figur 3a: ein Diagramm zur Abhängigkeit der Trennbruchfestigkeit und der Gleitbruchfestigkeit von der Geschwindigkeit des Spanwerkzeugs,
- Figur 3b: ein Diagramm zur Abhängigkeit der Trennbruchfestigkeit und der Gleitbruchfestigkeit von der Temperatur,
- Figur 3c: ein Diagramm zur Abhängigkeit der Kerbschlagarbeit von der Temperatur für drei typische Materialklassen und
- Figur 4: eine mögliche Ausführungsform des Spanabhebenden Werkzeuges.

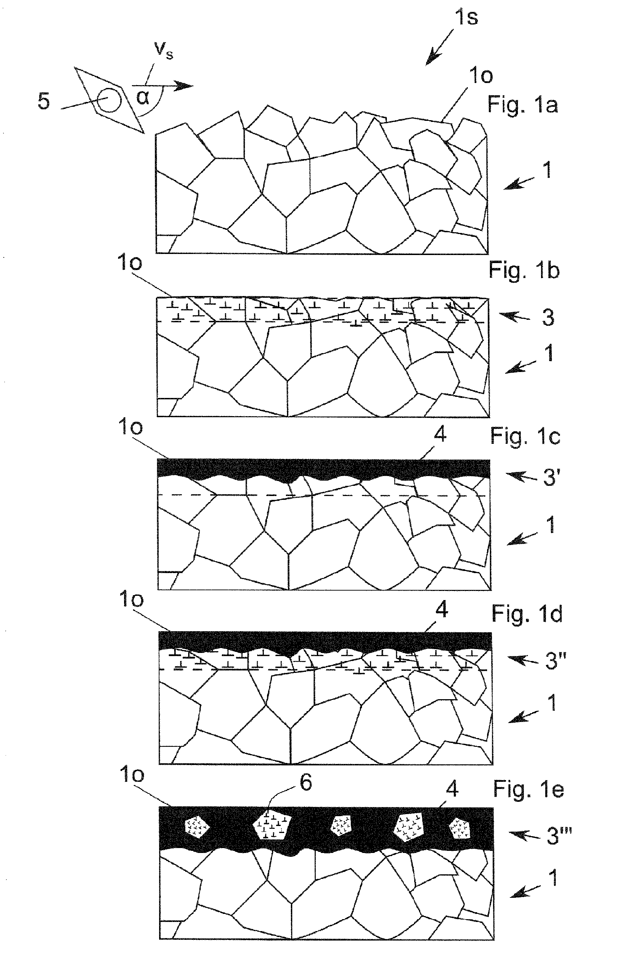

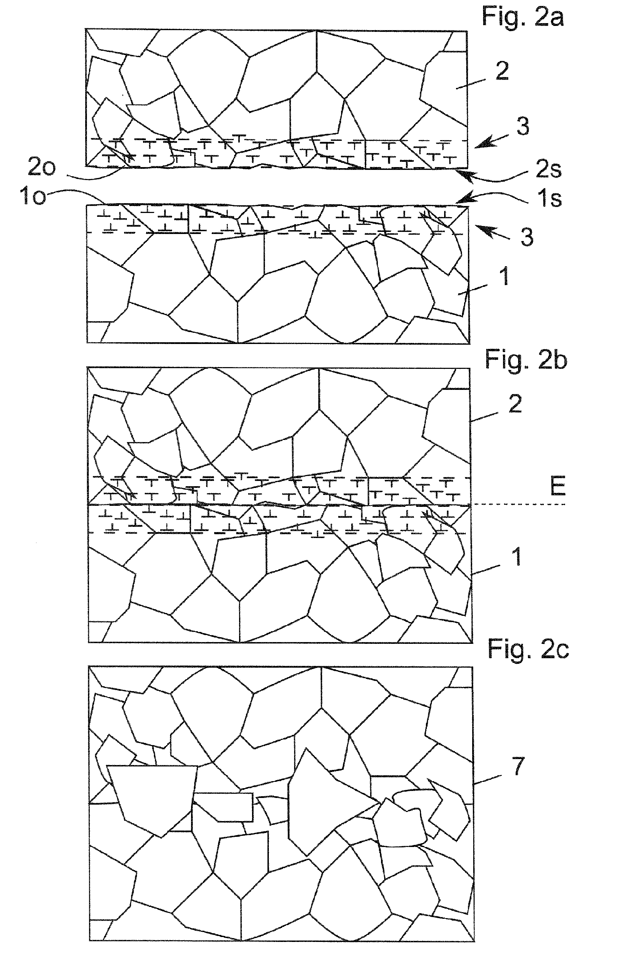

In Figur 1a ist ein aus einem ersten Material (hier Metall) bestehendes erstes Festkörpersubstrat 1 gezeigt, das an einer Bondseite 1s eine vergleichsweise hohe Oberflächenrauigkeit O (mittlere quadratische Rauheit bezogen auf die gesamte Bondseite 1s beziehungsweise eine zu bondende Bondoberfläche 1o der Bondseite 1s des ersten Festkörpersubstrats 1) aufweist. In den Figuren 1a bis 1e sowie 2a bis 2c sind jeweils nur kleine Flächenquerschnitte des ersten Festkörpersubstrats 1 und eines zweiten Festkörpersubstrats 2 (Figuren 2a bis 2c) gezeigt.

Für einen ersten Bearbeitungsschritt der ersten Bondoberfläche 1o ist ein Spanwerkzeug 5 vorgesehen, das mit einer Geschwindigkeit vₛ entlang der ersten Bondoberfläche 1o derart bewegbar ist, dass an der ersten Bondoberfläche 1o Material abgetragen wird. Auf den Materialabtrag hat insbesondere die Relativgeschwindigkeit vₛ des Spanwerkzeugs 5 als auch die Temperatur Tₛ während der ersten Bearbeitung einen erheblichen Einfluss. Daneben sind Einflussfaktoren die Form des Spanwerkzeugs 5 (Werkzeuggeometrie), die Temperatur des Werkzeugs selbst als auch ein Schneideneinsatzwinkel α gegenüber der Bewegungsrichtung (Geschwindigkeitsvektor vₛ) des Spanwerkzeugs 5.

Die vorgenannten Parameter werden erfindungsgemäß derart eingestellt (insbesondere durch empirische Ermittlung der vorgenannten Parameter), dass nach der ersten Bearbeitung und gegebenenfalls mindestens einer weiteren Bearbeitung der Bondoberfläche 1o ein oberflächennaher Bereich 3 (Figur 1b), 3' (Figur 1c), 3" (Figur 1d) oder 3"' (Figur 1e) gebildet wird.

In der in Figur 1b gezeigten Ausführungsform sind die obengenannten Parameter so gewählt, dass der oberflächennahe Bereich 3 nach der ersten Bearbeitung mit dem Spanwerkzeug 5 eine verglichen mit dem ersten Material des Festkörpersubstrats 1 gemäß Figur 1a erhöhte Versetzungsdichte aufweist.

In der in Figur 1c gezeigten Ausführungsform sind die obengenannten Parameter so gewählt, dass der oberflächennahe Bereich 3' nach der ersten Bearbeitung mit dem Spanwerkzeug 5 zumindest teilweise, vorzugsweise überwiegend, aus einem, insbesondere bereichsweise vollständig, amorphen Material 4 besteht.

In der in Figur 1d gezeigten Ausführungsform werden die obengenannten Parameter so gewählt, dass der oberflächennahe Bereich 3" nach der ersten Bearbeitung mit dem Spanwerkzeug 5 zumindest teilweise, vorzugsweise überwiegend, aus einem, insbesondere bereichsweise vollständig, amorphen Material 4 besteht und, insbesondere im Bereich außerhalb des amorphen Materials, eine gegenüber dem ersten Festkörpersubstrat 1 vor der ersten Bearbeitung erhöhte Versetzungsdichte aufweist.

In der in Figur 1e gezeigten Ausführungsform werden die obengenannten Parameter so gewählt, dass der oberflächennahe Bereich 3"' nach der ersten Bearbeitung mit dem Spanwerkzeug 5 zumindest teilweise, insbesondere vollständig, aus einem zumindest teilweise, insbesondere überwiegend, amorphen Material 4 gebildet ist, in welchem kristalline Bereiche 6, insbesondere mit einer erhöhten Versetzungsdichte, gebildet sind.

Es ist erfindungsgemäß denkbar, die vorgenannten Parameter für die vorgenannten Ausführungsformen während der ersten Bearbeitung zu ändern und/oder weitere Bearbeitungsschritte vorzusehen, um die genannten Merkmale zu erreichen. Jedenfalls arbeitet das Spanwerkzeug 5 zumindest überwiegend, vorzugsweise vollständig mit einer Geschwindigkeit vₛ unterhalb der kritischen Geschwindigkeit vₖ gemäß Figur 3a, so dass das Material überwiegend durch Verformungsbruch abgetragen wird. Gleichzeitig liegt die Temperatur während der ersten Bearbeitung zumindest überwiegend, vorzugsweise vollständig, oberhalb der kritischen Temperatur Tₖ gemäß Figur 3b, so dass auch hierdurch Verformungsbruch begünstigt wird.

Sollte nach diesem ersten Bearbeitungsschritt die nötige Planarität noch nicht erreicht sein, kann durch mindestens einen weiteren Bearbeitungsschritt die nötige Planarität eingestellt werden. Mit Vorzug besitzt das Spanwerkzeug 5 im zweiten Bearbeitungsschritt eine Geschwindigkeit vₛ oberhalb der kritischen Geschwindigkeit vₖ gemäß Figur 3a, so dass das Material überwiegend durch Trennbruch abgetragen wird. Gleichzeitig liegt die Temperatur während der zweiten Bearbeitung zumindest überwiegend, vorzugsweise vollständig, unterhalb der kritischen Temperatur Tₖ gemäß Figur 3b, so dass auch hierdurch Trennbruch begünstigt wird.

Die Dicke der Schicht aus amorphem Material 4 wird insbesondere durch die Werkzeuggeschwindigkeit vₛ bestimmt, die materialspezifisch und abhängig von der Materialtemperatur empirisch ermittelbar ist.

Erfindungsgemäß wird in den Ausführungsformen gemäß Figuren 1b bis 1e nicht nur eine Veränderung des Materials der oberflächennahen Bereiche 3, 3', 3", 3"' bewirkt, sondern insbesondere eine erhebliche Reduzierung der Oberflächenrauigkeit O mindestens um einen Faktor 5, insbesondere mindestens Faktor 10, vorzugsweise mindestens Faktor 20, so dass die Oberflächenrauigkeit O kleiner 1 µm, insbesondere kleiner 100 nm, vorzugsweise kleiner 10 nm, noch bevorzugter kleiner 1nm, mit größtem Vorzug unter 0,1 nm, ist.

Durch die Kombination der vorgenannten Maßnahmen und die entsprechende Bearbeitung des zweiten Festkörpersubstrats 2 an dessen Bondseite 2s zur Erzielung einer analogen Bondoberfläche 2o nach der ersten Bearbeitung und gegebenenfalls weitere Bearbeitungsschritte werden das erste Festkörpersubstrat 1 und das zweite Festkörpersubstrat 2 wie in Figur 2a gezeigt, zueinander ausgerichtet, so dass die Bondseite 1s und die Bondseite 2s gegenüberliegend angeordnet sind.

In dem in Figur 2b gezeigten Verfahrensschritt wird das erste Festkörpersubstrat 1 mit dem zweiten Festkörpersubstrat 2 an den Bondoberflächen 1o, 2o (Kontaktebene E) kontaktiert. Auf Grund der deutlich verringerten Oberflächenrauigkeit O beider Festkörpersubstrate 1, 2 ist der Abstand zwischen den Festkörpersubstraten 1, 2 äußerst gering, wodurch eine Rekristallisation des ersten Materials des ersten Festkörpersubstrats 1 mit einem zweiten Material des zweiten Festkörpersubstrats 2 begünstigt wird. Weiterhin und in Kombination damit wird die Rekristallisation durch die erfindungsspezifische Ausbildung des oberflächennahen Bereichs 3, 3', 3", 3"' begünstigt, so dass nach einer Rekristallisationszeit, insbesondere unter Temperaturbeaufschlagung ein permanenter Bond bis in eine Rekristallisationstiefe R größer als die Oberflächenrauigkeit O, insbesondere größer als die Tiefe des oberflächennahen Bereichs 3, 3', 3", 3"' bewirkt wird. Ein erfindungsgemäß gebondetes Festkörpersubstrat 7 ist in Figur 2c gezeigt, bei dem durch die erfindungsgemäßen Maßnahmen die Bondoberflächen 1o, 2o nicht mehr erkennbar sind, insbesondere auch kein amorphes Material 4 mehr vorliegt.

### Bezugszeichenliste

- 1: erstes Festkörpersubstrat
- 1o: Bondoberfläche
- 1s: Bondseite
- 2: zweites Festkörpersubstrat
- 2o: Bondoberfläche
- 2s: Bondseite
- 3, 3', 3'', 3''': oberflächennaher Bereich
- 4: amorphes Material
- 5: Spanwerkzeug
- 6: kristalline Bereiche
- 7: gebondetes Festkörpersubstrat
- 8: Werkzeughalter für mehrere Spanwerkzeuge.
- Tₛ: Temperatur
- Tₖ: kritische Temperatur
- T_{B}: Bondtemperatur
- vₛ: Geschwindigkeit
- vₖ: kritische Geschwindigkeit
- O: Oberflächenrauigkeit
- R: Rekristallisationstiefe
- E: Kontaktebene
- α: Schneideneinsatzwinkel

## Patentansprüche

1. Verfahren zum Bonden einer ersten Bondoberfläche (1o) eines ersten, aus einem ersten Material bestehenden Festkörpersubstrats (1) mit einer zweiten Bondoberfläche (2o) eines zweiten, aus einem zweiten Material bestehenden Festkörpersubstrats (2) mit folgenden Schritten, insbesondere folgendem Anlauf:
- Bearbeitung der ersten und/oder zweiten Bondoberflächen (1o, 2o) mit einem Spanwerkzeug (5) zur Erzeugung eines metastabilen Gefüges im zumindest oberflächennahen Bereich
- Kontaktieren des ersten Festkörpersubstrats (1) mit dem zweiten Festkörpersubstrat (2) an den Bondoberflächen (1o, 2o) und
- Temperaturbeaufschlagung der kontaktierten Festkörpersubstrate (1, 2) zur Ausbildung eines zumindest überwiegend durch Rekristallisation bewirkten permanenten Bonds an den Bondoberflächen (1o, 2o) **dadurch gekennzeichnet, daß** bei der Bearbeitung der ersten und/oder zweiten Bondoberflächen (1o, 2o) eine reduzierte Oberflächenrauhigkeit kleiner als 100nm, vorzugweise kleiner als 10 nm, noch bevorzugter kleiner als Inm, mit größtem Vorzug kleiner als 0,1nm erfolgt, und daß bei der Temperaturbeaufschlagung der kontaktierten Festkörpersubstrate (1,2) das permanente Bond jeweils bis in eine Rekristallisationstiefe R größer als die Oberflächenrauigkeit O der Bandoberflächen (1o, 2o) mit einer Bondtemperatur T_{B} oberhalb der Rekristallisationstemperatur ausgebildet wird.

2. Verfahren nach Anspruch 1, bei dem das erste und das zweite Material identisch ausgewählt werden.

3. Verfahren nach einem der vorhergehenden Ansprüche, bei dem das erste und/oder das zweite Material metallisch sind.

4. Verfahren nach einem der vorhergehenden Ansprüche, bei dem die Ausbildung des permanenten Bonds bei einer Bondtemperatur T_{B} größer als der kritischen Temperatur Tₖ erfolgt.

5. Verfahren nach einem der vorhergehenden Ansprüche, bei dem die Bearbeitung mit dem Spanwerkzeug (5) derart erfolgt, dass an der ersten und/oder zweiten Bondoberfläche (1o, 2o) eine amorphe Schicht (3) und/oder eine Schicht (2) erhöhter Versetzungsdichte gebildet wird.

6. Verfahren nach einem der vorhergehenden Ansprüche, bei dem nach der ersten Bearbeitung und vor dem Kontaktieren eine zweite Bearbeitung der ersten und/oder zweiten Bondoberflächen (1o, 2o) mit einem, insbesondere dem gleichen, Spanwerkzeug (5) bei einer Geschwindigkeit vₒ oberhalb der kritischen Geschwindigkeit vₖ, insbesondere bei einer Temperatur Tₒ unterhalb der kritischen Temperatur Tₖ, zur Reduzierung der Oberflächenrauigkeit O kleiner als 100 nm, vorzugsweise kleiner als 10 nm, noch bevorzugter kleiner als 1 nm, mit größtem Vorzug kleiner als 0,1 nm, erfolgt.

7. Vorrichtung zum Bonden einer ersten Bondoberfläche (1o) eines ersten, aus einem ersten Material bestehenden Festkörpersubstrats (1) mit einer zweiten Bondoberfläche (2o) eines zweiten, aus einem zweiten Material bestehenden Festkörpersubstrats (2) mit:
- einem Spanwerkzeug (5) zur Bearbeitung der ersten und/oder zweiten Bondoberflächen (1o, 2o) zur Erzeugung eines metastabilen Gefüges im zumindest oberflächennahen Bereich,
- Mitteln zum Kontaktieren des ersten Festkörpersubstrats (1) mit dem zweiten Festkörpersubstrat (2) an den Bondoberflächen (1o, 2o) und
- Mittel zur Temperaturbeaufschlagung der kontaktierten Festkörpersubstrate (1, 2) zur Ausbildung eines zumindest überwiegend durch Rekristallisation bewirkten permanenten Bonds an den Bondoberflächen (1o, 2o) **dadurch gekennzeichnet, daß** das Spanwerkzeug so versehen ist, dass eine reduzierte Oberflächenrauhigkeit kleiner als 100nm, vorzugweise kleiner als 10nm, noch bevorzugter kleiner als 1nm, mit größtem Vorzug kleiner als 0.1nm erfolgt,und daß das Mittel zur Temperaturbeaufschlagung so versehen ist, dass das permanente Bond jeweils bis in eine Rekristallisationstiefe R größer als die Oberflächenrauigkeit 0 der Bondoberflächen (1o, 2o) mit einer Bondtemperatur T_{B} oberhalb der Rekristallisationstemperatur ausgebildet wird.

8. Vorrichtung nach Anspruch 7, bei der das Spanwerkzeug (5) derart einstellbar ist, dass eine zweite Bearbeitung bei einer Geschwindigkeit vₒ oberhalb der kritischen Geschwindigkeit vₖ, insbesondere bei einer Temperatur Tₒ unterhalb der kritischen Temperatur Tₖ, zur Reduzierung der Oberflächenrauigkeit O kleiner als 100 nm, vorzugsweise kleiner als 10 nm, noch bevorzugter kleiner als 1 nm, mit größtem Vorzug kleiner als 0,1 nm, erfolgt.

## Claims

1. Method for bonding a first bond surface (1o) of a first solid substrate (1) consisting of a first material to a second bond surface (2o) of a second solid substrate (2) consisting of a second material with the following steps, especially in the following sequence:
- processing of the first and/or second bond surfaces (1o, 2o) with a cutting tool (5) is done to create a metastable structure in at least the near-surface area,
- bringing the first solid substrate (1) into contact with the second solid substrate (2) at the bond surfaces (1o, 2o), and
- exposure of the solid substrates (1, 2) that are in contact to temperature to form a permanent bond that is at least primarily produced by recrystallization at the bond surfaces (1o, 2o) **characterized in that** a reduced surface roughness of less than 100 nm, preferably less than 10 nm, even more preferably less than 1 nm, and most preferably less than 0.1 nm is produced during said processing of the first and/or the second bond surfaces (1o, 2o), and that during said exposure of the solid substrates (1,2) to temperature the permanent bond in each case is produced down to a recrystallization depth R that is greater than the surface roughness O of the bond surfaces (1o, 2o) with a bond temperature T_{B} that exceeds the recrystallization temperature.

2. Method in accordance with Claim 1, in which the first and second materials are selected to be identical.

3. Method in accordance with one of the preceding claims in which the first and/or second materials are metals.

4. Method in accordance with one of the preceding claims in which the formation of the permanent bond takes place at a bond temperature T_{B} that is greater than the critical temperature Tₖ.

5. Method in accordance with one of the preceding claims in which the working with the cutting tool (5) is done in such a way that an amorphous layer (3) and/or a layer (2) of elevated dislocation density is formed at the first and/or second bond surface (1o, 2o).

6. Method in accordance with one of the preceding claims in which, after the first working is done and before contact is made, a second working of the first and/or second bond surfaces (1o, 2o) with a tool (5), especially the same tool, is carried out at a speed vₒ that exceeds the critical speed vₖ, especially at a temperature Tₒ that is below the critical temperature Tₖ in order to reduce the surface roughness O to less than 100 nm, preferably less than 10 nm, even more preferably less than 1 nm, and most preferably less than 0.1 nm.

7. Device for bonding a first bond surface (1o) of a first solid substrate (1) consisting of a first material to a second bond surface (2o) of a second solid substrate (2) consisting of a second material, with:
- a cutting tool (5) for working the first and/or second bond surfaces (1o, 2o), to create a metastable structure in at least the near-surface area,
- means for bringing the first solid substrate (1) into contact with the second solid substrate (2) at the bond surfaces (1o, 2o), and
- means for exposing to temperature the solid substrates (1, 2) that are in contact to form a permanent bond that is at least primarily produced by recrystallization at the bond surfaces (1o, 2o) **characterized in that** a reduced surface roughness of less than 100 nm, preferably less than 10 nm, even more preferably less than 1 nm, and most preferably less than 0.1 nm in each case down to a recrystallization depth R that exceeds the surface roughness O of the bond surfaces (1o, 2o) with a bond temperature T_{B} that is greater than the recrystallization temperature.

8. Device in accordance with Claim 7, in which the cutting tool (5) can be adjusted in such a way that a second working is carried out at a speed vₒ, that exceeds the critical speed vₖ, especially at a temperature Tₒ that is below the critical temperature Tₖ, in order to reduce the surface roughness O to less than 100 nm, preferably less than 10 nm, even more preferably less than 1 nm, and most preferably less than 0.1 nm.

## Revendications

1. Procédé de collage d'une première surface de collage (1o) d'un premier substrat de corps fixe (1) composé d'un premier matériau à une seconde surface de collage (2o) d'un second substrat de corps fixe (2) composé d'un second matériau, comprenant les étapes suivantes, en particulier le déroulement suivant :
- usinage de la première et/ou de la seconde surface de collage (1o, 2o) avec un outil d'usinage par copeaux (5) pour produire une structure métastable dans la zone au moins proche de la surface,
- mise en contact du premier substrat de corps fixe (1) avec le second substrat de corps fixe (2) sur les surfaces de collage (1o, 2o) et
- alimentation en température des substrats de corps fixe (1, 2) mis en contact pour former un collage permanent provoqué au moins en majorité par recristallisation sur les surfaces de collage (1o, 2o), **caractérisé en ce que** lors de l'usinage de la première et/ou de la seconde surface de collage (1o, 2o), une rugosité de surface réduite inférieure à 100 nm, de préférence inférieure à 10 nm, plus encore de préférence inférieure à 1nm, de manière la plus préférée inférieure à 0,1 nm se produit, et que lors de l'alimentation en température des substrats de corps fixe (1, 2) mis en contact, le collage permanent est formé respectivement jusqu'à une profondeur de recristallisation R supérieure à la rugosité de surface 0 des surfaces de collage (1o, 2o) avec une température de collage T_{B} au-dessus de la température de recristallisation.

2. Procédé selon la revendication 1, dans lequel les premier et second matériaux sont choisis identiques.

3. Procédé selon l'une des revendications précédentes, dans lequel le premier et/ou le second matériau est/sont métalliques.

4. Procédé selon l'une des revendications précédentes, dans lequel la formation du collage permanent a lieu à une température de collage T_{B} supérieure à une température supérieure à la température critique Tₖ.

5. Procédé selon l'une des revendications précédentes, dans lequel l'usinage avec l'outil d'usinage par copeaux (5) s'effectue de telle façon qu'une couche amorphe (3) et/ou une couche (2) d'épaisseur déplacée plus élevée est formée sur la première et/ou la seconde surface de collage (1o, 2o).

6. Procédé selon l'une des revendications précédentes, dans lequel après le premier usinage et avant la mise en contact, un second usinage de la première et/ou de la seconde surface de collage (1o, 2o) est effectué avec un outil d'usinage par copeaux (5), en particulier le même, à une vitesse Vₒ supérieure à la vitesse critique Vₖ, en particulier à une température Tₒ inférieure la température critique Tₖ, pour réduire la rugosité de surface O inférieure à 100 nm, de préférence inférieure à 10 nm, plus encore de préférence inférieure à 1nm, de manière la plus préférée inférieure à 0,1 nm.

7. Dispositif de collage d'une première surface de collage (1o) d'un premier substrat de corps fixe (1) composé d'un premier matériau à une seconde surface de collage (2o) d'un second substrat de corps fixe (2) composé d'un second matériau, comprenant :
- un outil d'usinage par copeaux (5) pour usiner la première et/ou la seconde surface de collage (1o, 2o) pour produire une structure métastable dans la zone au moins proche de la surface,
- des moyens de mise en contact du premier substrat de corps fixe (1) avec le second substrat de corps fixe (2) sur les surfaces de collage (1o, 2o) et
- des moyens d'alimentation en température des substrats de corps fixe (1, 2) mis en contact pour former un collage permanent provoqué au moins en majorité par recristallisation sur les surfaces de collage (1o, 2o), **caractérisé en ce que** le dispositif d'usinage par copeaux est ainsi prévu qu'une rugosité de surface réduite inférieure à 100 nm, de préférence inférieure à 10 nm, plus encore de préférence inférieure à 1nm, de manière la plus préférée inférieure à 0,1 nm se produit, et que le moyen d'alimentation en température est ainsi prévu que le collage permanent est formé respectivement jusqu'à une profondeur de recristallisation R supérieure à la rugosité de surface O des surfaces de collage (1o, 2o) avec une température de collage T_{B} au-dessus de la température de recristallisation.

8. Dispositif selon la revendication 7, dans lequel l'outil d'usinage par copeaux (5) est ainsi réglable qu'un second usinage est effectué à une vitesse Vₒ supérieure à la vitesse critique Vₖ, en particulier à une température Tₒ inférieure à la température critique Tₖ, pour réduire la rugosité de surface O inférieure à 100 nm, de préférence inférieure à 10 nm, plus encore de préférence inférieure à 1nm, de manière la plus préférée inférieure à 0,1 nm.
